# FASCICULE DE BREVET EUROPEEN

(11) **EP 2 573 501 B1**
(45) Date de publication et mention de la délivrance du brevet: **02.04.2014**
(21) Numéro de dépôt: 12290296.8
(22) Date de dépôt: 10.09.2012
(51) Int. Cl.: F41H 5/22, F41H 7/02, A61G 3/06, B60P 1/43

(54) **Système d'accès à un habitacle**
Zugangssystem zu einem Fahrzeuginnenraum
System for accessing a passenger compartment

(30) Priorité: 26.09.2011 FR 1102908
(43) Date de publication de la demande: 27.03.2013
(73) Titulaire: NEXTER Systems, 42328 Roanne (FR)
(72) Inventeur: Serpeault, Jérôme, 18023 Bourges (FR)
(74) Mandataire: Célanie, Christian

(56) Documents cités:
- EP-A1- 1 837 234
- EP-A2- 0 825 411
- WO-A2-03/010041
- CN-A- 101 881 583

## Description

Le secteur technique de la présente invention est celui des systèmes d'accès à un habitacle et notamment pour des véhicules dont le plancher est surélevé.

Divers dispositifs ont été proposés pour faciliter l'accès à un habitacle comme par exemple dans les véhicules.

Le brevet EP-0976376 enseigne un dispositif pour monter dans une ambulance dans lequel une marche est logée dans une rampe. Deux arrangements sont prévus pour proposer soit un accès par la rampe lorsque la marche est en position rangée soit un accès par la marche lorsque la rampe est en position rangée. La rampe comprend une passerelle pivotante et déployée au moyen d'une articulation permettant de la replier en deux afin de faciliter son rangement.

Le brevet GB-2268133 enseigne différentes rampes d'accès de véhicule, adaptées pour les fauteuils roulants. Chacune de ces rampes comprend également une passerelle pivotante et déployée au moyen d'une articulation permettant de la replier en deux pour faciliter son rangement.

La demande de brevet WO-2008/081201 enseigne une rampe en trois parties permettant l'accès à un véhicule. Là encore une passerelle pivotante est déployée au moyen d'une articulation permettant de la replier en deux afin de faciliter son rangement, la passerelle étant disposée verticalement dans sa position de rangement. Lorsque la rampe est repliée, sa troisième portion est disposée horizontalement à l'intérieur du véhicule pour former le plancher. Cette troisième portion s'incline dans le prolongement de la passerelle déployée vers l'extérieur, grâce à un plan incliné aménagé dans le plancher. Par ailleurs la passerelle en position rangée forme une cloison verticale à l'arrière du véhicule et autorise la fermeture d'une porte arrière du véhicule venant derrière celle-ci.

La demande de brevet EP-1650077 enseigne une rampe d'accès à un véhicule comprenant une passerelle pivotante pouvant être déployée manuellement et reposant sur des pieds prévus à cet effet. Là encore la passerelle est déployée au moyen d'une articulation permettant de la replier en deux afin de faciliter son rangement. La passerelle une fois repliée est associée à une porte arrière venant contre un bord latéral de la passerelle pour fermer l'ouverture arrière du véhicule.

On connait également le document CN-101881583 qui concerne un véhicule muni d'une porte arrière.

Ainsi, il apparaît d'une manière générale que les systèmes d'accès visant à compenser une hauteur de plancher, notamment pour l'accès à des véhicules, sont déployés manuellement et ne sont pas prévus pour des accès survenant de façon imprévus et dans l'urgence. De plus, les systèmes existants nécessitent généralement des modifications importantes du châssis du véhicule, ce qui peut être incompatible avec certains types de véhicules tels que des véhicules blindés.

Le but de la présente invention est de pallier un ou plusieurs des inconvénients de l'art antérieur en proposant un système d'accès pouvant être déployé plus efficacement dans les situations d'urgence. L'invention pourra notamment être adaptée sur des véhicules blindés et surélevés.

L'invention a donc pour objet un système d'accès à un habitacle par une ouverture pratiquée dans un bâti de l'habitacle, le système d'accès étant constitué d'au moins une porte articulée par rapport au bâti par une première articulation horizontale et formant une rampe inclinée en position ouverte, système **caractérisé en ce qu'il** comprend au moins un actionneur de mise en mouvement de la porte, en liaison avec la porte et le bâti, un marchepied couvrant au moins en partie l'extérieur de la porte et articulé par rapport au bâti par une deuxième articulation parallèle à la première et d'axe décalé par rapport à celle-ci, le marchepied étant relié à la porte par au moins un élément d'entraînement qui est raccordé à la porte par une troisième articulation et au marchepied par une quatrième articulation, les axes des première, deuxième, troisième et quatrième articulations étant parallèles entre eux et agencés pour former les quatre sommets d'un parallélogramme déformable entre une position ouverte et une position fermée de la porte.

Selon une autre particularité de l'invention, la première articulation est en liaison avec un bord inférieur de la porte et avec un bord inférieur de l'ouverture, la deuxième articulation étant en dessous de la première et disposée horizontalement vers l'extérieur de l'habitacle par rapport à la première. Le bord inférieur de la porte correspond ici à la porte en position fermée.

Selon une autre particularité de l'invention, le marchepied présente une dimension supérieure à celle de la porte de façon à dépasser en hauteur par rapport à la porte lorsque celle-ci est en position fermée. Cette longueur résulte de la hauteur finale qui est souhaitée entre le marchepied et le sol lorsque la rampe est en position ouverte.

Selon une autre particularité de l'invention, l'habitacle est équipé de premières plaques extérieures de blindage fixées au bâti par des premiers éléments d'absorption des chocs, la porte comprenant un battant relié à ladite première articulation et équipé de deuxièmes plaques extérieures de blindage fixées au battant par des deuxièmes éléments d'absorption des chocs, le marchepied comprenant un panneau relié à la deuxième articulation et équipé de troisièmes plaques extérieures de blindage fixées au panneau par des troisièmes éléments d'absorption des chocs. Les éléments d'absorption des chocs se présenteront par exemple sous la forme d'entretoises rigides ou bien sous la forme d'entretoises compressibles par exemple de blocs de mousse métallique.

Selon une autre particularité de l'invention, les troisièmes plaques extérieures de blindage chevauchent les deuxièmes plaques extérieures de blindage qui elles-mêmes chevauchent les premières plaques extérieures de blindage.

Selon une autre particularité de l'invention, les premières plaques extérieures de blindage laissent au moins une première zone non couverte du bâti délimitant un logement dudit actionneur de la porte, ladite première zone étant couverte par les deuxièmes plaques extérieures de blindage.

Selon une autre particularité de l'invention, les deuxièmes plaques extérieures de blindage laissent une deuxième zone non couverte du battant de la porte, cette deuxième zone délimitant au moins un logement du moyen d'entraînement du marchepied et un logement pour le panneau, cette deuxième zone étant couverte par les troisièmes plaques extérieures de blindage.

Selon une autre particularité de l'invention, la porte est mobile entre sa position de fermeture et sa position déployée selon un débattement angulaire maximum compris entre 90° et 135°.

Selon une autre particularité de l'invention, le système d'accès comprend au moins un organe de butée de fin de course de la porte en position d'ouverture maximale.

Un autre objet de la présente invention concerne un véhicule comprenant un habitacle équipé d'un système d'accès selon l'invention.

Un tout premier avantage de l'invention réside dans le fait que ce système est particulièrement adapté aux véhicules surélevés évoluant en situation d'urgence.

Un autre avantage est que ce système est adapté aux véhicules blindés.

Un autre avantage de l'invention réside dans le fait qu'une commande automatisée du système est possible notamment par le pilotage des vérins hydrauliques commandant l'ouverture et la fermeture du système d'accès.

Un autre avantage de l'invention est que, lorsque la rampe est fermée, le marchepied est dissimulé par les surprotections, ce qui le protège des agressions types branches, jets de pierres. Cette dissimulation du marchepied est par ailleurs favorable du point de vue de la réduction de la signature visuelle et radar du véhicule.

D'autres caractéristiques, avantages et détails de l'invention seront mieux compris à la lecture du complément de description qui va suivre de modes de réalisation donnés à titre d'exemple en relation avec des dessins sur lesquels :
- la figure 1 est un schéma de côté d'un dispositif d'accès dans une position intermédiaire entre sa position ouverte et sa position fermée,
- la figure 2 est un schéma de côté du dispositif d'accès de la figure 1 dans sa position ouverte,
- la figure 3 est un schéma de côté du dispositif d'accès de la figure 1 dans sa position fermée,
- la figure 4 représente un dispositif d'accès fermé selon une vue de face,
- la figure 5 représente une vue en perspective d'une ouverture réalisée dans un habitacle d'un véhicule destiné à être équipé d'un système d'accès selon l'invention,
- la figure 6 représente une vue en perspective d'une porte pour un système d'accès selon l'invention,
- la figure 7 représente une vue en perspective d'un marchepied pour un système d'accès selon l'invention,
- la figure 8 représente une vue en perspective d'un système d'accès monté sur l'arrière d'un véhicule dans une position intermédiaire entre sa position ouverte et sa position fermée,
- la figure 9 représente une vue de côté d'un système d'accès en position ouverte permettant l'accès à l'ouverture arrière d'un véhicule, et
- la figure 10 représente une vue d'ensemble du véhicule de la figure 9.

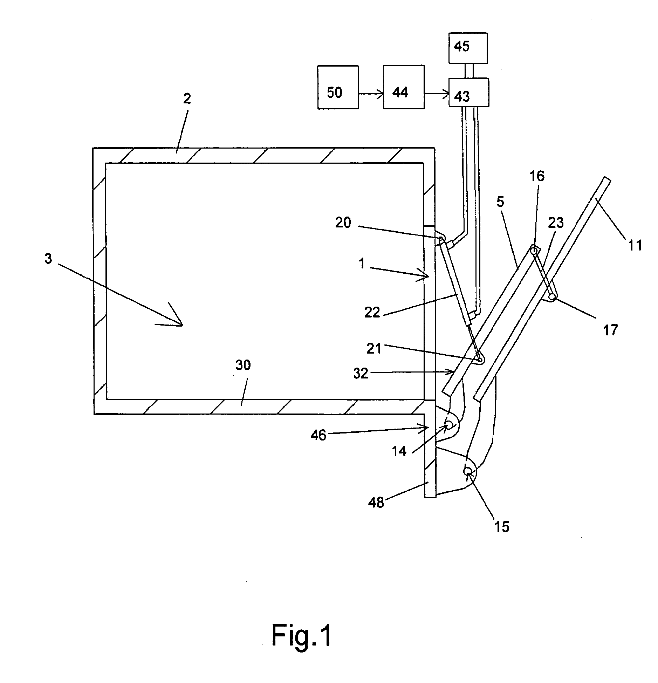

L'invention va à présent être décrite avec davantage de détails. La figure 1 représente une vue en coupe d'un habitacle 3 délimité par une paroi formant un bâti 2. Cet habitacle 3 peut être celui d'un véhicule ou un autre type d'habitacle. L'accès à l'intérieur de l'habitacle est réalisé par une ouverture 1 pratiquée dans la paroi 2 formant le bâti et obturée par un système d'accès comportant une porte 4.

Le système d'accès est représenté à la figure 1 dans une position intermédiaire entre une position fermée et une position ouverte. Une mise en mouvement vers la position de fermeture ou d'ouverture est effectuée au moyen de deux actionneurs 22, disposés de part et d'autre de la porte 4, commandés par un dispositif de commande automatique décrit ci-après. Pour des raisons de commodité, un seul actionneur 22 est représenté sur cette figure. Il va de soi que l'ouverture et la fermeture pourraient être réalisées manuellement sans l'aide des actionneurs. En cas d'urgence, l'ouverture pourra être réalisée simplement par gravité. Compte tenu de la masse de la rampe, une fermeture manuelle sera possible en prévoyant des moyens permettant de démultiplier les efforts (treuil par exemple).

Pour la clarté des dessins, un dispositif de commande hydraulique ne sera représenté qu'à la figure 1.

L'actionneur hydraulique 22 se présente sous la forme d'un vérin double action dont des mouvements d'entrée ou de sortie de tige ou un blocage en position sont commandés de manière automatique en fonction de la position d'un distributeur 43 de fluide en liaison avec les chambres du vérin. La position du distributeur 43 est commandée par un organe de commande 44. Cet organe de commande 44 pourra lui-même être asservi à un système central de calcul 50 gérant différentes commandes de façon automatique. Une centrale hydraulique 45 fournissant une pression hydraulique déterminée alimente le distributeur 43 et le vérin 22.

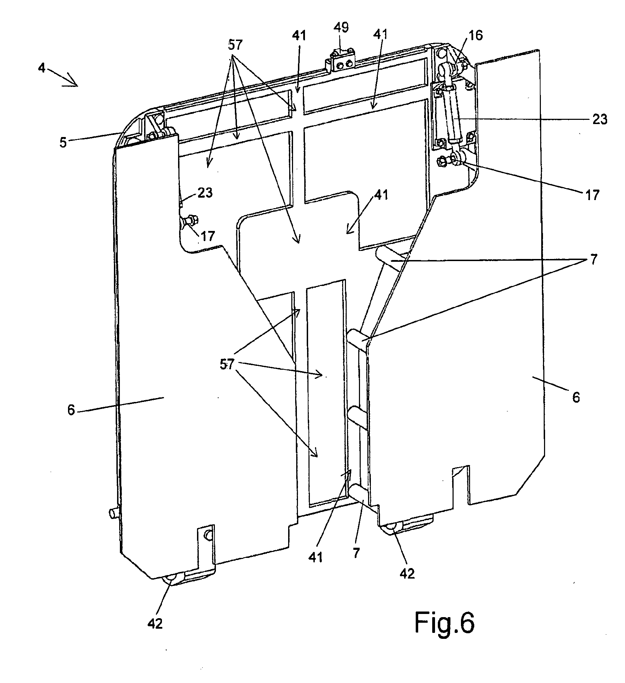

Comme schématisé aux figures 1 à 3, le système d'accès comprend une porte 4 dont le battant 5 est articulé par rapport au bâti 2 par une première articulation 14. Une porte 4 équipée de ses plaques de blindage sera décrite ultérieurement en relation avec la figure 6.

La porte 4 est par exemple mise en mouvement par les deux actionneurs 22 disposés de chaque côté de la porte. Chaque actionneur 22 du type vérin commandé est lié au battant 5 de la porte et au bâti 2 par deux articulations 20 et 21. L'articulation 14 de la porte avec le bâti est disposée contre une portion 48 du bâti disposée sous l'ouverture 1. On pourra aussi fixer cette articulation 14 par des pattes venant sous le plancher 30, comme il sera décrit par la suite. Les actionneurs 22 sont reliés à l'extérieur de la paroi 2 entourant l'ouverture et à une face extérieure du battant 5 de la porte. On pourrait aussi prévoir de relier le ou les vérins à double effet à l'intérieur de la paroi 2 et à une face intérieure du battant de la porte.

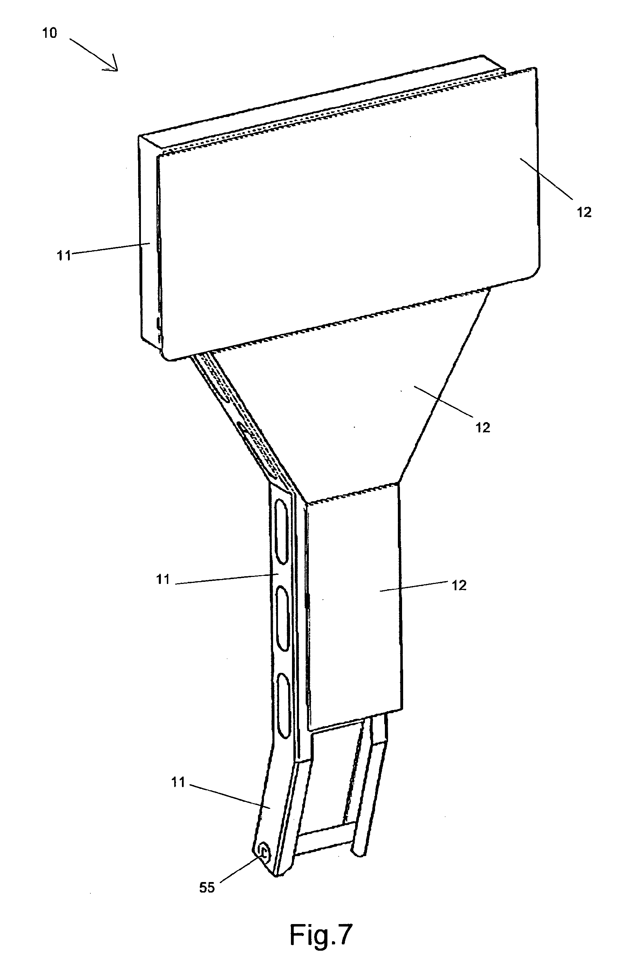

La porte 4 est couplée à un marchepied 10 comprenant un panneau 11 articulé par rapport au bâti 2 par une deuxième articulation 15. Un marchepied 10 équipé de ses plaques de blindage sera décrit ultérieurement en relation avec la figure 7.

Le mouvement du marchepied sera automatiquement commandé lors de l'ouverture de la porte 4. Ce mouvement est assuré par un élément d'entraînement 23 reliant la porte au marchepied.

Cet élément 23 d'entraînement du marchepied par la porte est par exemple une bielle liée par une troisième articulation 16 au battant 5 de la porte et par une quatrième articulation 17 au panneau 11 du marchepied.

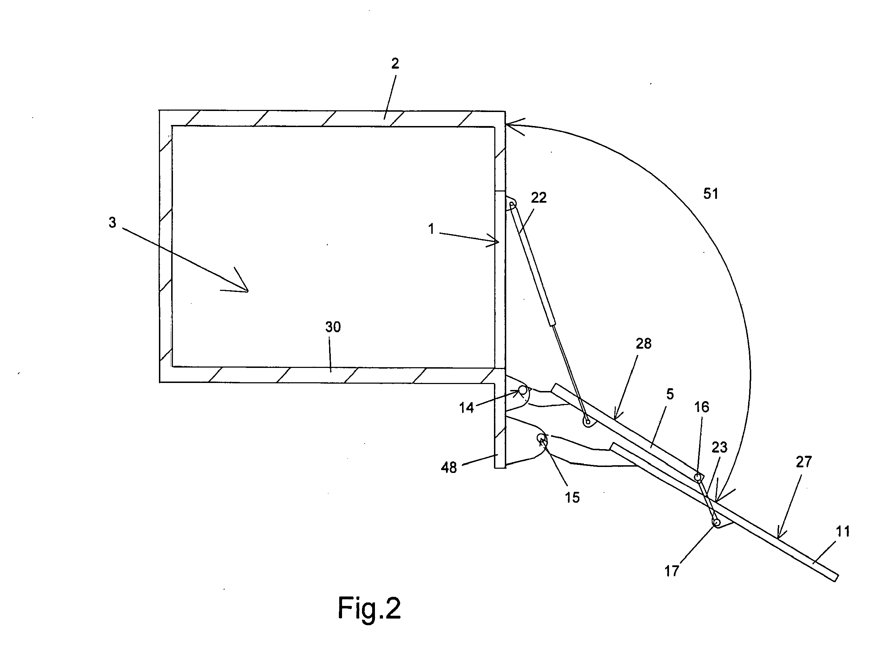

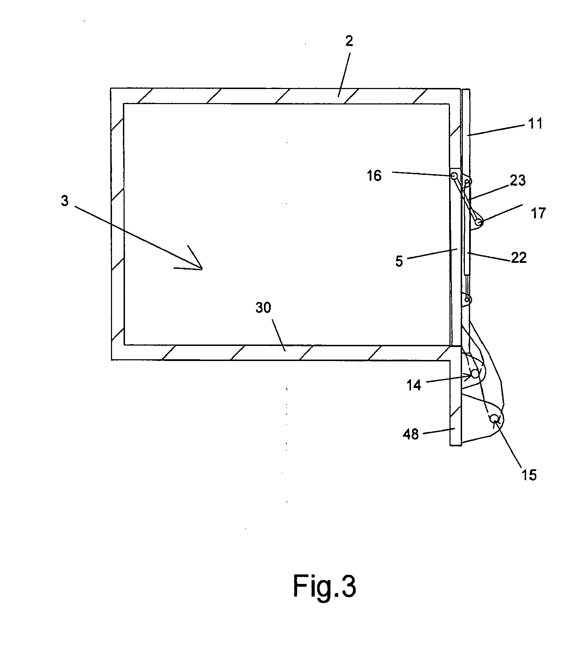

La première articulation 14 disposée entre le battant 5 de la porte et le bâti 2 est liée à un bord inférieur 32 de la porte 4 et à un bord inférieur 46 du bâti 2 en dessous de l'ouverture 1. De manière non limitative, le bord inférieur 46 de l'ouverture pourra être réalisé par le plancher 30 ou par une portion prolongeant celui-ci vers le bas ou d'une manière générale par une portion 48 du bâti disposée sous l'ouverture 1. La porte montée pivotante dans le bas de l'ouverture est représentée dans une position complètement ouverte à la figure 2. En position de fermeture telle que représentée à la figure 3, la porte est disposée verticalement. Les positions d'inclinaison vers le bas ou verticale de la porte, sont bien-sûr définies en référence à un plancher 30 horizontal solidaire du bâti 2.

La deuxième articulation 15 entre le panneau 11 du marchepied et le bâti 2 est disposée parallèlement à la première articulation 14, la deuxième articulation 15 étant disposée avec son axe de rotation décalé par rapport à la première. Cette deuxième articulation 15 est fixée à une portion 48 du bâti disposée en dessous de l'ouverture 1. On pourrait aussi fixer cette deuxième articulation 15 par des pattes venant se fixer sous le plancher 30, comme il sera décrit par la suite. Les première et deuxième articulations sont disposées horizontalement pour que la porte 4 constitue une rampe d'accès en position ouverte.

Le système d'accès selon l'invention permet avantageusement de conserver un plancher 30 de véhicule plan et horizontal tout en ayant un plancher surélevé.

Comme schématisé aux figures 1 à 3, la deuxième articulation 15 entre le bâti 2 et le panneau 11 du marchepied est disposée à une hauteur inférieure à la première articulation 14 et est décalée horizontalement vers l'extérieur de l'habitacle 3 par rapport à la première articulation 14. De façon à permettre l'entrainement du marchepied 10 par la porte 4, au moyen de la biellette 23, les axes des première, deuxième, troisième et quatrième articulations, référencées 14, 15, 16 et 17, sont parallèles entre eux et sont disposés selon les quatre sommets d'un parallélogramme déformable entre une position ouverte et une position fermée de la porte.

Dans la position d'ouverture représentée à la figure 2, le système d'accès présente une surface 27 du marchepied sur laquelle il est possible de marcher et qui forme une première marche prolongée par une surface 28 du battant 5 de la porte 4 formant une deuxième marche pour accéder à l'habitacle 3. La porte 4 est par exemple mobile entre sa position de fermeture représentée à la figure 3 et une position d'ouverture maximum représentée à la figure 2, selon un débattement angulaire maximum, référencé 51, compris entre 90° et 135°.

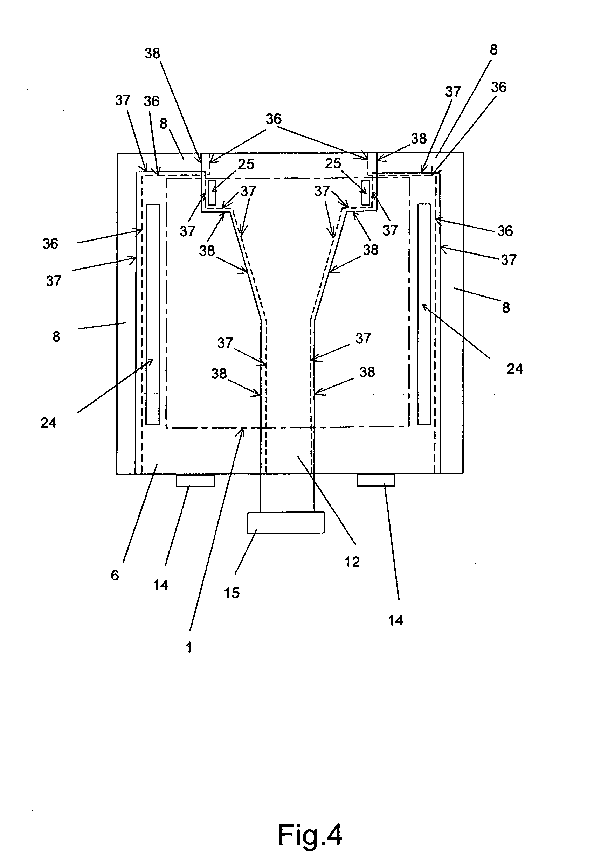

Comme schématisé à la figure 3 et à la figure 4, le panneau 11 du marchepied est réalisé avec une dimension supérieure à celle de la porte de façon à dépasser en hauteur par rapport au battant 5 de la porte lorsque celle-ci est en position fermée. Lors de l'ouverture, le bord libre du panneau 11 du marchepied s'éloignera encore du bord libre du battant 5 de la porte. Le bord libre désigne ici le bord à l'opposé de celui lié à l'articulation du panneau ou du battant.

Le système d'accès a été représenté sur les figures 1 à 3 sans plaques extérieures de blindage. Un exemple de positionnement de plaques extérieures de blindage sur le bâti, sur la porte et sur le marchepied est représenté à la figure 4. Le système d'accès est représenté selon une vue de face, en position fermée. La porte et le marchepied du système d'accès ainsi que l'habitacle sont équipés de plaques extérieures de blindage. Les plaques extérieures de blindage sont supportées par des éléments d'absorption des chocs tels que des entretoises rigides ou bien de la mousse métallique.

Plus précisément, la paroi délimitant l'habitacle est couverte en partie par des premières plaques extérieures de blindage 8 qui apparaissent notamment sur les côtés latéraux de l'habitacle tel que représenté à la figure 4. Ces premières plaques extérieures de blindage 8 sont recouvertes à la jonction avec des deuxièmes plaques extérieures de blindage 6 fixées au battant de la porte et à la jonction avec des troisièmes plaques extérieures de blindage 12 fixées au panneau du marchepied. La référence 36 désigne les bords des plaques extérieures de blindage 8 fixées au bâti. La référence 37 désigne les bords des plaques extérieures de blindage fixées au battant de la porte. La référence 38 désigne les bords des plaques extérieures de blindage fixées au panneau du marchepied.

Ainsi, comme représenté à la figure 4, les troisièmes plaques extérieures de blindage 12 chevauchent les deuxièmes plaques extérieures de blindage 6 qui elles-mêmes chevauchent les premières plaques extérieures de blindage 8. Les troisièmes plaques extérieures de blindage 12 chevauchent également les premières plaques extérieures de blindage 8.

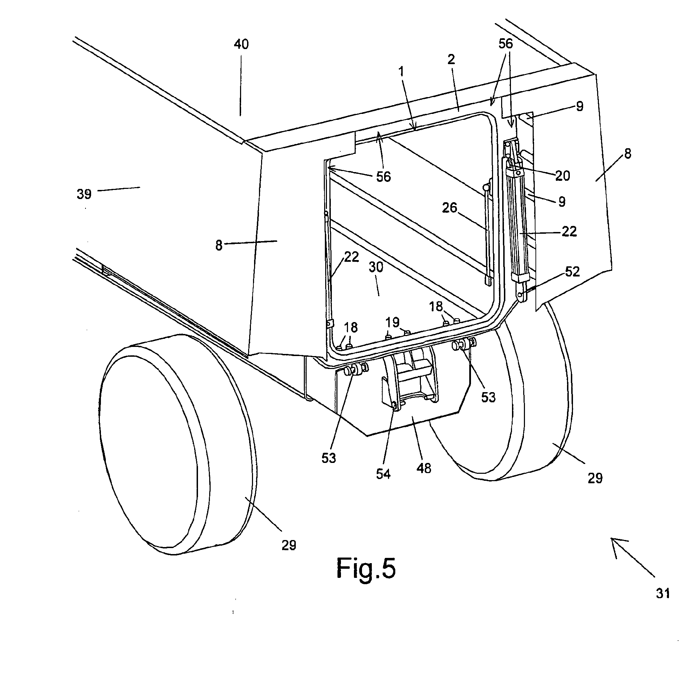

Les premières plaques extérieures de blindage 8 laissent une zone 56 non couverte du bâti 2 de part et d'autre de l'ouverture 1. Cette zone 56 qui apparaît à la figure 5, délimite des logements 24 pour les actionneurs 22 et est disposée en vis-à-vis des deuxièmes plaques extérieures de blindage 6 fixées sur la porte. L'emplacement de l'ouverture 1 correspond sensiblement à celui du battant de la porte en position fermée. Les actionneurs peuvent ainsi être protégés par la porte 4 tout en étant disposés à l'extérieur de l'habitacle.

Les plaques extérieures de blindage 6 fixées à la porte laissent une zone 57 non couverte du battant de la porte 4. Cette zone 57 qui apparaît à la figure 6, comprend une étendue permettant le positionnement du marchepied et délimite également des logements 25 pour les éléments d'entraînement 23 du marchepied 10 par la porte 4. Cette zone 57 du battant non couverte par les deuxièmes plaques extérieures de blindage 6 de la porte, est couverte par les troisièmes plaques extérieures de blindage 12 du marchepied qui viennent ainsi en vis-à-vis de cette zone.

Lorsque le système d'accès est en position fermée, le marchepied est positionné en partie en retrait par rapport aux plaques de blindage de la porte, de façon à ce que les troisièmes plaques 12 extérieures de blindage du marchepied soient plaquées contre les deuxièmes plaques 6 extérieures de blindage de la porte. De même, la porte fermée est disposée de façon à ce que les deuxièmes plaques 6 extérieures de blindage de la porte soient plaquées contre les premières plaques 8 extérieures de blindage du bâti.

Il est aussi prévu, au-dessus de l'ouverture 1, une partie du bâti non couverte par les premières plaques extérieures de blindage 8 mais couverte par les troisièmes plaques extérieures de blindages 12 du marchepied. Cela permet notamment de prévoir un marchepied dépassant en hauteur par rapport au battant 5 de la porte dans la position de fermeture du système d'accès. La hauteur supplémentaire du marchepied permet d'avoir une longueur supplémentaire pour la première marche. Les dimensions de la première marche pourront ainsi être choisies en fonction des besoins et en particulier en fonction de la hauteur finale qui est souhaitée entre le marchepied et le sol lorsque la rampe est en position ouverte.

Comme il apparaît sur la figure 4, les articulations 14 et respectivement 15 entre d'une part le bâti et d'autre part la porte et respectivement le marchepied 10, ont été représentées à un niveau inférieur à celui des plaques extérieures de blindage mais on pourrait prévoir de prolonger les plaques extérieures de blindage pour recouvrir ces articulations et les protéger.

De manière non limitative, la première articulation 14 sera réalisée par deux charnières disposées sous les parties latérales de l'ouverture 1. Le marchepied sera par exemple articulé par une charnière centrale unique formant la deuxième articulation 15. De manière non limitative, le panneau 11 du marchepied 10 comprend une portion rectangulaire formant la première marche 27, se prolongeant par une portion 59 de dimension inférieure et trapézoïdale puis par une portion rectangulaire 60 allongée et de largeur correspondant sensiblement à la largeur de la charnière centrale formant la deuxième articulation.

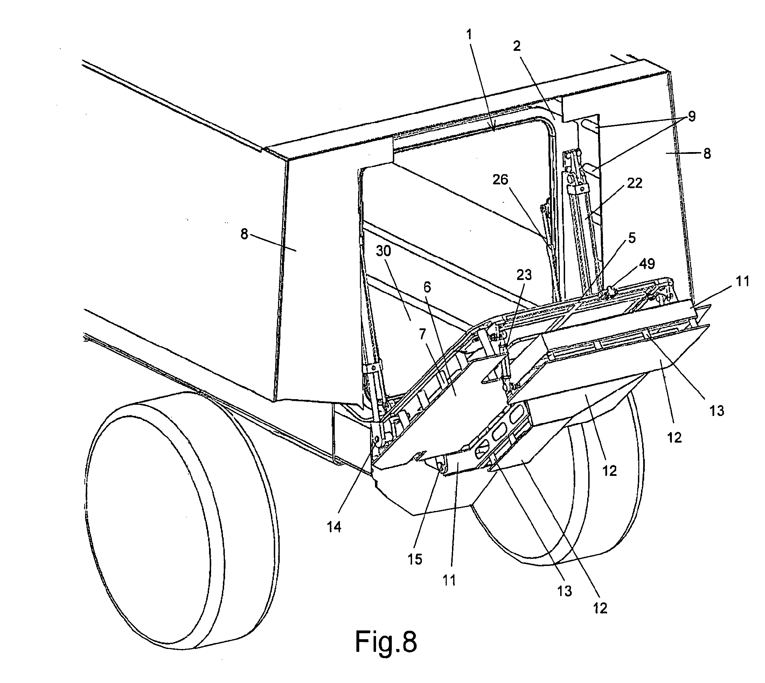

Les figures 5, 6 et 7 représentent respectivement une ouverture, une porte 4 et un marchepied 10 représentés seuls et correspondant au système d'accès monté sur une ouverture et représenté à la figure 8.

La figure 5 représente une ouverture 1 aménagée dans un véhicule blindé. L'ouverture 1 est disposée à l'arrière du véhicule 31. Pour la clarté du dessin, on n'a pas représenté certains organes du véhicule, tels que ses essieux, les roues 29 étant simplement positionnées. Le véhicule 31 représenté est un véhicule surélevé et avec un plancher intérieur 30 horizontal. Bien-sûr le plancher 30 est disposé horizontalement lorsque le véhicule se trouve à plat.

On pourra prévoir des blindages 39 latéraux du véhicule 31 et un toit 40 blindé. Les blindages latéraux pourront notamment être prolongés vers le bas selon les types de véhicule.

Les premières plaques 8 de blindage du bâti 2 laissent une zone 56 non couverte disposée au-dessus et sur les côtés de l'ouverture 1.

L'actionneur 22, côté droit dans le plan de la figure, du système d'accès apparaît sur un côté de l'ouverture 1, l'actionneur 22 disposé côté gauche opposé étant partiellement masqué par les plaques extérieures de blindage 8 fixées sur le bâti de l'habitacle. Chaque actionneur 22 est lié, à chacune de ses extrémités, à un axe d'articulation. Un logement 52 de l'articulation 21 avec la porte est représenté seul, à l'extrémité inférieure de l'actionneur 22. Une articulation 20 avec le bâti 2, est prévue à l'extrémité supérieure de l'actionneur 22. Ces deux articulations 20 et 21 ont leur axe de rotation parallèle à celui des articulations 14 et 15 de la porte 4 et du marchepied 10.

Les premières plaques extérieures de blindage 8 sont fixées au bâti par des éléments d'absorption des chocs se présentant sous la forme d'entretoises 9. Les éléments d'absorption des chocs ont une épaisseur déterminée permettant de réaliser, dans cette épaisseur, des logements pour les actionneurs.

Un élément 26 de butée de fin de course se présente sous la forme d'un compas articulé par rapport au bâti 2 et disposé en face de l'ouverture 1. D'une façon classique dans le domaine de la mécanique, on entend par compas un assemblage de deux barres articulées l'une à l'autre et par ailleurs articulées : l'une sur le bâti et l'autre sur la porte.

La longueur maximale du compas articulé déplié permet de limiter la course du battant de la porte. De cette façon les efforts exercés sur les marches 27 et 28 dans la position d'ouverture maximale, sont supportés par l'élément 26 de butée et non par les actionneurs. On pourrait aussi utiliser une commande de blocage des actionneurs en position, sans utiliser d'élément de butée de fin de course. On pourrait aussi prévoir des butées mécaniques situées au niveau de l'articulation entre la porte et le bâti.

Les axes 53 des charnières formant la première articulation 14 de la porte avec le bâti, sont représentés seuls à la figure 5. Ces axes 53 sont maintenus chacun par un organe de fixation au châssis, chacun de ces organes étant fixé sous le plancher 30 au moyen de boulons 18. Ces axes 53 sont destinés à coopérer avec des logements 42 réalisés sur la porte 4.

L'axe 54 de la charnière formant la deuxième articulation 15 du marchepied avec le bâti, est représenté seul (figure 5). Cet axe 54 est maintenu par un organe de fixation au châssis, cet organe étant fixé sous le plancher 30 au moyen de boulons 19. Cet organe de fixation comprend des pattes 47 fixées par les boulons 19 ainsi qu'une pièce 58 de renfort soudée à la portion 48 du châssis disposée sous l'ouverture 1. L'axe 54 de la charnière est destiné à coopérer avec un logement 55 réalisé sur le marchepied 10.

Comme représenté à la figure 6, le battant 5 comprend des zones de renfort 41 plus épaisses. Les éléments d'absorption des chocs 7 supportant les deuxièmes plaques extérieures de blindage 6 sont par exemple des entretoises 7 appuyées contre des zones 41 de renfort. Les deuxièmes plaques de blindage 6 laissent une zone 57 non couverte du battant 5 de la porte, cette zone 57 étant centrale et s'étendant sur toute la hauteur de la porte. Il apparaît notamment dans la partie médiane de la porte un espace libre non couvert par les deuxièmes plaques 6 de blindage correspondant sensiblement au profil du marchepied 10. De manière non limitative, les éléments 23 d'entraînement du marchepied 10 sont disposés à la hauteur de l'élément rectangulaire du marchepied 10 formant la première marche 27.

Chaque élément d'entraînement 23 est lié au battant 5 de la porte 4 par une articulation 16. Les éléments 23 d'entraînement du marchepied sont disposés dans le haut de la porte 4. Deux articulations 16 et 17 sont prévues aux extrémités de chaque élément 23 d'entraînement. La porte 4 comprend aussi des organes portant les logements 42 pour les axes 53 de la première articulation 14 entre la porte et le bâti. Ces logements 42 sont disposés dans le bas de la porte 4. Un organe 49 de verrouillage de la porte en position fermée est disposé dans le haut de la porte. Les deuxièmes plaques de blindage 6 dépassent par ailleurs de chaque côté du battant 5 de la porte 4.

Sur la figure 7 qui représente le marchepied 10, les troisièmes plaques extérieures de blindage 12 forment un écran de protection dépassant de part et d'autre du panneau 11. Le panneau 11 du marchepied comprend une portion rectangulaire 60 allongée s'inclinant vers l'habitacle et de largeur correspondant sensiblement à celle des pattes 47 de la deuxième articulation 15 entre le bâti et le marchepied. Cette portion ainsi qu'une partie 59 de forme trapézoïdale est formée notamment par deux longerons latéraux du panneau 11. La partie trapézoïdale 59 se poursuit par une partie rectangulaire qui forme la première marche 27 lorsque le système d'accès est en position d'ouverture. Le logement 55 pour l'axe 54 de la deuxième articulation 15 est disposé dans le bas du marchepied 10.

La figure 8 représente le système d'accès dans une position intermédiaire entre la position fermée et la position d'ouverture maximale. Le marchepied 10 s'est éloigné de la porte 4 et notamment les troisièmes plaques 12 extérieures de blindage du marchepied 10 se sont éloignées des deuxièmes plaques 6 de blindage de la porte, alors que ces plaques étaient plaquées l'une contre l'autre dans la position de fermeture du système d'accès.

On voit les troisièmes éléments 13 d'absorption des chocs qui relient le panneau 11 du marchepied et les troisièmes plaques extérieures 12 de blindage du marchepied.

Un élément 23 d'entraînement est visible entre le battant 5 de la porte et le panneau 11 du marchepied.

Les deuxièmes plaques 6 extérieures de blindage de la porte, parallèles au battant 5 de la porte, sont inclinées d'un angle d'environ 45° par rapport à une position verticale de fermeture de l'ouverture 1. Les actionneurs 22 liés par deux articulations à leurs deux extrémités, pivotent de façon à suivre le déplacement du battant 5, lorsque l'actionneur 22 s'étend ou se raccourcit.

L'élément 26 de butée de fin de course, relié à la face intérieure du battant 5 de la porte, sort en partie de l'habitacle. Il est prévu deux organes de butée de fin de course de la porte en position d'ouverture maximale. Ces deux organes 26 de butée de fin de course se présentent ici sous la forme de compas. Les organes de butée de fin de course et les actionneurs hydrauliques sont ici liés à des parties latérales de la porte.

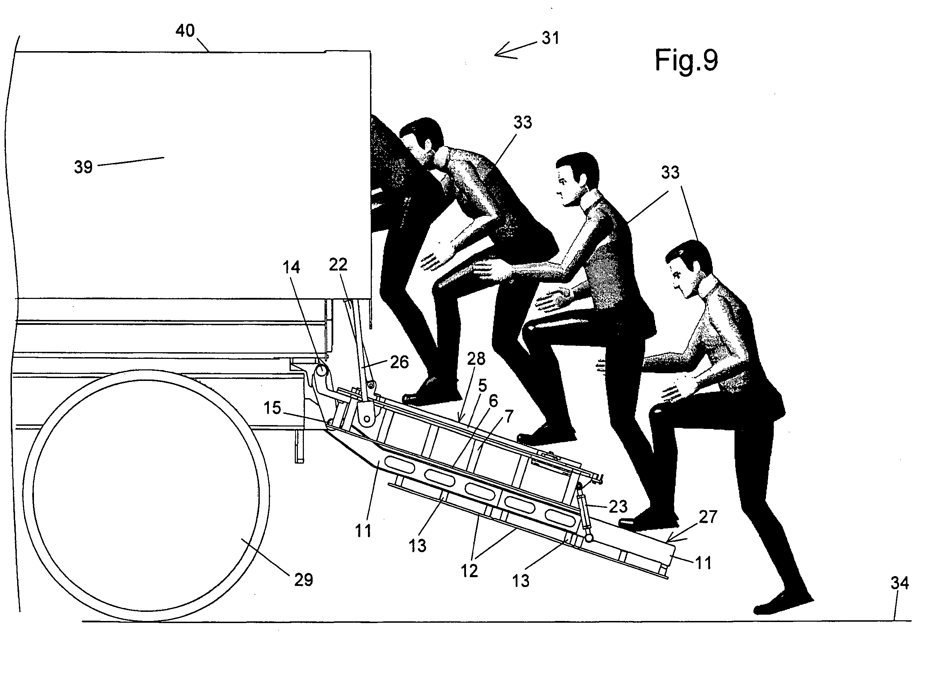

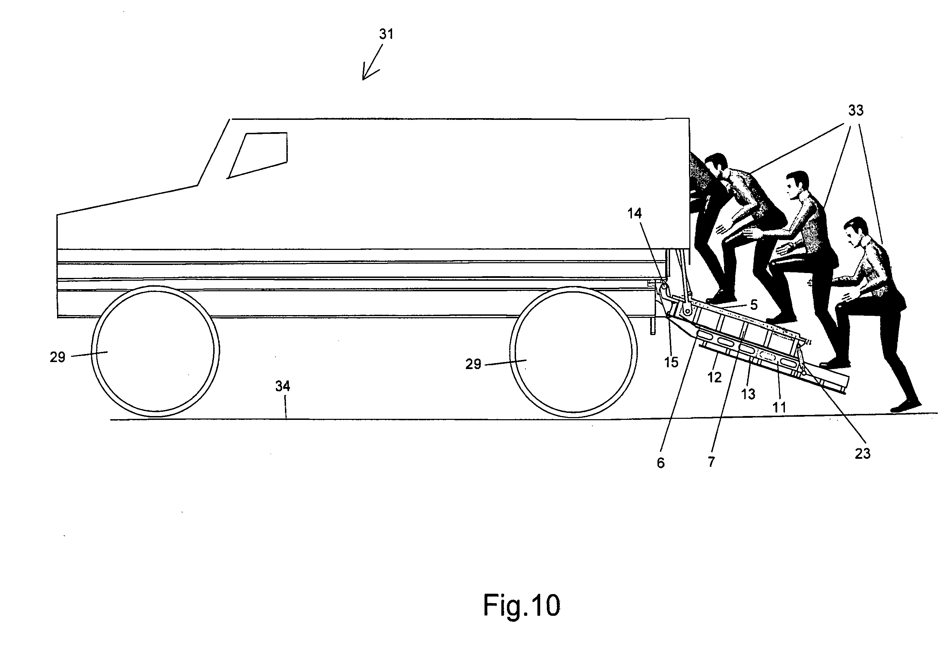

Le véhicule représenté aux figures 8, 9 et 10 est un véhicule 31 militaire blindé et surélevé. Le véhicule 31 équipé du système d'accès selon l'invention est ainsi équipé d'un plancher 30 surélevé et horizontal. Dans la position représentée aux figures 9 et 10, le compas de butée de fin de course 26 est en extension maximale. L'élément de butée 26 permet notamment de soulager l'actionneur 22 qui n'a plus à supporter la porte ni le marchepied tant que le système d'accès reste dans la position d'ouverture maximale.

Un opérateur 33 a été représenté, à la figure 9, en plusieurs positions successives au cours de sa montée dans le véhicule 31. L'opérateur 33 venant du terrain 34, s'appuie sur la première marche 27 du système d'accès. Cette première marche 27 est formée par l'extrémité du panneau 11 du marchepied 10. L'extrémité libre du panneau 11 du marchepied est ici inclinée vers le bas. De même le battant 5 de la porte 4 est incliné dans une position avec son bord libre incliné vers le bas. L'utilisateur 33 pose ensuite un pied sur la deuxième marche 28. La deuxième marche 28 est réalisée par une face du battant 5 de la porte. L'utilisateur 33 peut ensuite poser un deuxième pied sur la deuxième marche pour ensuite entrer dans l'habitacle du véhicule.

Une vue d'ensemble d'un véhicule vu de côté correspondant à la figure 9 est représentée à la figure 10. Dans le cas d'un système d'accès installé sur un véhicule, le bâti est formé par le châssis du véhicule, son plancher et la cabine à l'arrière du véhicule.

Il est évident pour l'homme du métier que la présente invention permet d'autres variantes de réalisation. Par conséquent, les présents modes de réalisation doivent être considérés comme illustrant l'invention définie par les revendications jointes.

## Revendications

1. Système d'accès à un habitacle (3) pour véhicule blindé par une ouverture (1) pratiquée dans un bâti (2) de l'habitacle (3), le système d'accès étant constitué d'au moins une porte (4) articulée par rapport au bâti (2) par une première articulation (14) horizontale et formant une rampe inclinée en position ouverte, système comprenant au moins un actionneur (22) de mise en mouvement de la porte (4), en liaison avec la porte (4) et le bâti (2), ainsi qu'un marchepied, **caractérisé en ce que** ledit marchepied (10) couvre au moins en partie l'extérieur de la porte et articulé par rapport au bâti (2) par une deuxième articulation (15) parallèle à la première et d'axe décalé par rapport à celle-ci, le marchepied (10) étant relié à la porte (4) par au moins un élément d'entraînement (23) qui est raccordé à la porte (4) par une troisième articulation (16) et au marchepied (10) par une quatrième articulation (17), les axes des première, deuxième, troisième et quatrième articulations (14, 15, 16, 17) étant parallèles entre eux et agencés pour former les quatre sommets d'un parallélogramme déformable entre une position ouverte et une position fermée de la porte (4).

2. Système d'accès selon la revendication 1, **caractérisé en ce que** la première articulation (14) est en liaison avec un bord inférieur (32) de la porte (4) et avec un bord inférieur (46) de l'ouverture, la deuxième articulation (15) étant en dessous de la première et disposée horizontalement vers l'extérieur de l'habitacle (3) par rapport à la première.

3. Système d'accès selon l'une des revendications précédentes, **caractérisé en ce que** le marchepied (10) présente une dimension supérieure à celle de la porte (4) de façon à dépasser en hauteur par rapport à la porte (4) lorsque celle-ci est en position fermée.

4. Système d'accès selon l'une des revendications précédentes, **caractérisé en ce que** l'habitacle (3) est équipé de premières plaques extérieures de blindage (8) fixées au bâti (2) par des premiers éléments d'absorption des chocs (9), la porte comprenant un battant (5) relié à ladite première articulation (14) et équipé de deuxièmes plaques extérieures de blindage (6) fixées au battant (5) par des deuxièmes éléments d'absorption des chocs (7), le marchepied comprenant un panneau (11) relié à la deuxième articulation (15) et équipé de troisièmes plaques extérieures de blindage (12) fixées au panneau (11) par des troisièmes éléments d'absorption des chocs (13).

5. Système d'accès selon la revendication 4, **caractérisé en ce que** les troisièmes plaques extérieures de blindage (12) chevauchent les deuxièmes plaques extérieures de blindage (6) qui elles-mêmes chevauchent les premières plaques extérieures de blindage (8).

6. Système d'accès selon la revendication 4 ou 5, **caractérisé en ce que** les premières plaques extérieures de blindage (8) laissent au moins une première zone (56) non couverte du bâti (2) délimitant un logement (24) dudit actionneur de la porte, ladite première zone étant couverte par les deuxièmes plaques extérieures de blindage (6).

7. Système d'accès selon l'une des revendications 4 à 6, **caractérisé en ce que** les deuxièmes plaques extérieures de blindage (6) laissent une deuxième zone (57) non couverte du battant (5) de la porte (4), cette deuxième zone délimitant au moins un logement (25) du moyen d'entraînement du marchepied et un logement pour le panneau (11), cette deuxième zone étant couverte par les troisièmes plaques extérieures de blindage (12).

8. Système d'accès selon l'une des revendications précédentes, **caractérisé en ce que** la porte (4) est mobile entre sa position de fermeture et sa position déployée selon un débattement angulaire maximum compris entre 90° et 135°.

9. Système d'accès selon l'une des revendications précédentes, **caractérisé en ce qu'il** comprend au moins un organe (26) de butée de fin de course de la porte en position d'ouverture maximale.

10. Véhicule (31) comprenant un habitacle équipé d'un système d'accès selon l'une des revendications précédentes.

## Patentansprüche

1. Zugangssystem zu einem Fahrgastraum (3) für ein gepanzertes Fahrzeug durch eine Öffnung (1), welche in einem Gestell (2) des Fahrgastraums (3) eingebracht ist, wobei das Zugangssystem von wenigstens einer Tür (4) gebildet wird, welche über ein erstes horizontales Gelenk (14) gelenkig in Bezug auf das Gestell (2) angebracht ist und eine geneigte Rampe in geöffneter Position bildet, wobei das System wenigstens ein Stellglied (22), um die Tür (4) in Bewegung zu setzen, in Verbindung mit der Tür (4) und dem Gestell (2), sowie ein Trittbrett umfasst, ***dadurch gekennzeichnet, dass*** das genannte Trittbrett (10) wenigstens zum Teil das Äußere der Tür bedeckt und gelenkig in Bezug auf das Gestell (2) über ein zweites Gelenk (15), welches parallel zum ersten Gelenk ist und eine zu diesem versetzte Achse aufweist, angebracht ist, wobei das Trittbrett (10) mit der Tür (4) über wenigstens ein Antriebsmittel (23) verbunden ist, welches über ein drittes Gelenk (16) mit der Tür (4) und über ein viertes Gelenk (17) mit dem Trittbrett (10) verbunden ist, wobei die Achsen des ersten, zweiten, dritten und vierten Gelenkes (14, 15, 16, 17) parallel zueinander und eingerichtet sind, um die vier Scheitelpunkte eines Parallelogramms zu bilden, welches zwischen einer geöffneten und einer geschlossenen Position der Tür (4) verformbar ist.

2. Zugangssystem nach Anspruch 1, **dadurch gekennzeichnet, dass** das erste Gelenk (14) mit dem unteren Rand (32) der Tür (4) und mit dem unteren Rand (46) der Öffnung in Verbindung steht, wobei das zweite Gelenk (15) unterhalb des ersten liegt und horizontal nach außen des Fahrgastraumes (3) in Bezug auf das erste angeordnet ist.

3. Zugangssystem nach einem der vorhergehenden Ansprüche, **dadurch gekennzeichnet, dass** das Trittbrett (10) eine größere Abmessung als diejenige der Tür (4) derartig aufweist, dass es die Tür (4) in der Höhe überragt, wenn sich diese in geschlossener Position befindet.

4. Zugangssystem nach einem der vorhergehenden Ansprüche, **dadurch gekennzeichnet, dass** der Fahrgastraum (3) mit ersten äußeren Platten zur Panzerung (8) ausgerüstet ist, welche durch erste Elemente zur Absorption von Stößen (9) am Gestell (2) befestigt sind, wobei die Tür einen Drehflügel (5) umfasst, welcher mit dem genannten ersten Gelenk (14) verbunden ist und mit zweiten äußeren Platten zur Panzerung (6) ausgerüstet ist, welche durch zweite Elemente zur Absorption von Stößen (7) am Drehflügel (5) befestigt sind, wobei das Trittbrett eine Tafel (11) umfasst, welche mit dem zweiten Gelenk (15) verbunden und mit dritten äußeren Platten zur Panzerung (12) ausgerüstet ist, welche durch dritte Elemente zur Absorption von Stößen (13) an der Tafel (11) befestigt sind.

5. Zugangssystem nach Anspruch 4, **dadurch gekennzeichnet, dass** die dritten äußeren Platten zur Panzerung (12) teilweise über den zweiten äußeren Platten zur Panzerung (6) liegen, welche ihrerseits teilweise über den ersten äußeren Platten zur Panzerung (8) liegen.

6. Zugangssystem nach Anspruch 4 oder 5, **dadurch gekennzeichnet, dass** die ersten äußeren Platten zur Panzerung (8) wenigstens eine erste, nicht bedeckte Zone (56) des Gestells (2) übrig lassen, welche eine Aufnahme (24) des genannten Stellgliedes der Tür abgrenzt, wobei die genannte erste Zone von den zweiten äußeren Platten zur Panzerung (6) bedeckt wird.

7. Zugangssystem nach einem der Ansprüche 4 bis 6, **dadurch gekennzeichnet, dass** die zweiten äußeren Platten zur Panzerung (6) eine zweite, nicht bedeckte Zone (57) des Drehflügels (5) der Tür (4) übrig lassen, wobei diese zweite Zone wenigstens eine Aufnahme (25) des Antriebsmittels des Trittbretts und die Aufnahme für die Tafel (11) abgrenzt, wobei die zweite Zone von den dritten äußeren Platten zur Panzerung (12) bedeckt wird.

8. Zugangssystem nach einem der vorhergehenden Ansprüche, **dadurch gekennzeichnet, dass** die Tür (4) zwischen ihrer geschlossenen Position und ihrer ausgeklappten Position entsprechend einem maximalen Ausschlagwinkel beweglich ist, welcher zwischen 90° und 135° liegt.

9. Zugangssystem nach einem der vorhergehenden Ansprüche, **dadurch gekennzeichnet, dass** es wenigstens ein Organ (26) zum Endlagenanschlag der Tür in der Position der maximalen Öffnung umfasst.

10. Fahrzeug (31) umfassend einen Fahrgastraum, welcher mit einem Zugangssystem nach einem der vorhergehenden Ansprüche ausgerüstet ist.

## Claims

1. A system to access a passenger compartment (3) by a doorway (1) made in a chassis frame (2) of the passenger compartment (3), the access system being constituted by at least one door (4) hinged with respect to the chassis frame (2) by a first horizontal articulated joint (14) and forming an inclined ramp in its open position, comprising at least one actuator (22) to move the door (4), linked to the door (4) and chassis frame (2), and a step plate, **characterised in that** the said step plate (10) at least partially covers the outside of the door and hinged with respect to the chassis frame (2) by a second articulated joint (15) parallel to the first one and with a hinge pin that is offset with respect to the first one, the step plate (10) being linked to the door (4) by at least one drive element (23) that is connected to the door (4) by a third articulated joint (16) and to the step plate (10) by a fourth articulated joint (17), the pins of the first, second, third and fourth articulated joints (14, 15, 16, 17) being parallel to one another and arranged so as to form the four summits of a parallelogram deformable between an open position and a closed position of the door (4).

2. An access system according to Claim 1, **characterised in that** the first articulated joint (14) is linked to a lower edge (32) of the door (4) and a lower edge (46) of the doorway, the second articulated joint (15) being below the first one and arranged horizontally towards the exterior of the passenger compartment (3) with respect to the first one.

3. An access system according to one of the above Claims, **characterised in that** the step plate (10) is of a size that is greater than that of the door (4) so as to overlap it heightwise when the door (4) is in the closed position.

4. An access system according to one of the above Claims, **characterised in that** the passenger compartment (3) is equipped with first external armour plates (8) fixed to the chassis frame (2) by first shock-absorbing elements (9), the door comprising a panel (5) linked to the said first articulated joint (14) and equipped with second external armour plates (6) fixed to the panel (5) by second shock-absorbing elements (7), the step plate comprising a panel (11) linked to the second articulated joint (15) and equipped with third external armour plates (12) fixed to the panel (11) by third shock-absorbing elements (13).

5. An access system according to Claim 4, **characterised in that** the third external armour plates (12) overlap the second external armour plates (6) which in turn overlap the first external armour plates (8).

6. An access system according to Claims 4 or 5, **characterised in that** the first external armour plates (8) leave at least a first unprotected zone (56) on the chassis frame (2) delimiting a housing (24) for said door actuator, said first zone being protected by the second external armour plates (6).

7. An access system according to one of Claims 4 to 6, **characterised in that** the second external armour plates (6) leave a second unprotected zone (57) of the door panel (5), said second zone delimiting at least one housing for the drive means of the step plate and a housing for the panel (11), this second zone being protected by the third external armour plates (12).

8. An access system according to one of the above Claims, **characterised in that** the door (4) is able to move between its closed position and its open position with a maximal angular clearance of between 90° and 135°.

9. An access system according to one of the above Claims, **characterised in that** it comprises at least one limit stop organ (26) to block further movement of the door when in its maximal open position.

10. A vehicle (31) comprising a passenger compartment equipped with an access system according to one of the above Claims.
